# EUROPÄISCHE PATENTSCHRIFT

(11) **EP 3 579 200 B1**
(45) Veröffentlichungstag und Bekanntmachung des Hinweises auf die Patenterteilung: **19.02.2025**
(21) Anmeldenummer: 19174832.6
(22) Anmeldetag: 16.05.2019
(51) Int. Cl.: G07C 5/08, G01P 1/16

(54) **BEWEGUNGSSENSOR UND VERFAHREN ZUM BETREIBEN EINES BEWEGUNGSSENSORS**
MOTION SENSOR AND METHOD FOR OPERATING A MOTION SENSOR
DÉTECTEUR DE MOUVEMENT ET PROCÉDÉ DE FONCTIONNEMENT D'UN DÉTECTEUR DE MOUVEMENT

(30) Priorität: 08.06.2018 DE 102018209163
(43) Veröffentlichungstag der Anmeldung: 11.12.2019
(73) Patentinhaber: Continental Automotive Technologies GmbH, 30175 Hannover (DE)
(72) Erfinder: Dohmen, Ralf, 78050 Villingen-Schwenningen (DE); Köhn, Norbert, 78050 Villingen-Schwenningen (DE); Grüner, Marion, 78628 Rottweil (DE)
(74) Vertreter: Continental Corporation

(56) Entgegenhaltungen:
- DE-A1- 102007 048 284
- ANONYMOUS: "Common Criteria Protection Profile Digital Tachograph - Motion Sensor (MS PP)", 19 May 2017 (2017-05-19), XP055633529, Retrieved from the Internet <URL:https://www.bsi.bund.de/SharedDocs/Downloads/DE/BSI/Zertifizierung/Reporte/ReportePP/pp0093b_pdf.pdf;jsessionid=DA19428A38815FAE19F9ED9402936930.2_cid341?__blob=publicationFile&v=3> [retrieved on 20191017]
- MEHMET COLAK ET AL: "Cryptographic security mechanisms of the next generation digital tachograph system and future considerations", JOINT RESEARCH CENTRE SCIENTIFIC AND POLICY REPORT, EUROPEAN COMMISSION, 1 January 2012 (2012-01-01), XP055599689

## Beschreibung

Die Erfindung betrifft einen Bewegungssensor, insbesondere einen Bewegungssensor für analoge und digitale Tachografen.

Tachografen, oft auch Fahrtenschreiber genannt, sind Geräte, die zur Überwachung verschiedener Fahrzeugbetriebsparameter in Kraftfahrzeugen installiert werden. Die zu überwachenden Fahrzeugbetriebsparameter werden meist durch Sensoren, insbesondere Bewegungssensoren, erfasst und vom Tachografen gespeichert und weiterverarbeitet. Fahrzeugbetriebsparameter können beispielsweise Fahrtzeiten, eine zurückgelegte Strecke oder während der zurückgelegten Strecke gefahrene Durchschnitts- und Maximalgeschwindigkeiten sein. Auch bestimmte Ereignisse, wie beispielsweise Geschwindigkeitsüberschreitungen oder Lenkzeitunterbrechungen, können vom Tachografen erfasst und gespeichert werden. Die aufgezeichneten und gespeicherten Daten können anschließend ausgelesen werden.

Zum Bestimmen solcher Fahrzeugbetriebsparameter kommen unter anderem Bewegungssensoren, welche in vielen Ländern gesetzlich vorgeschrieben sind, zum Einsatz, welche beispielsweise Informationen über die Fahrzeuggeschwindigkeit und/oder die zurückgelegte Wegstrecke bereitstellen können. Derartige Bewegungssensoren unterliegen dabei, wie die Tachografen selber, sicherheitstechnischen Anforderungen und müssen verschiedene gesetzliche Vorgaben erfüllen. Eine vom Tachografen zu erfüllende Vorgabe liegt beispielsweise darin, dass die Sicherheitsanforderungen des gesamten Systems, bestehend aus einer Fahrzeugeinheit, dem Bewegungssensor, der Tachografenkarte und, optional, externen GNSS-Geräten, hinsichtlich der sicherheitstechnischen Anforderungen entsprechend dem Common Criteria Standard implementiert werden müssen. Zu diesem Zweck wurden durch das von der EU Kommission beauftragte Joint Research Centre verschiedene als "Common Criteria Protection Profiles" bezeichnete Vorgaben herausgegeben. Diese besagen, dass in jeder Lebensphase des Systems verschiedene Anforderungen hinsichtlich der IT-Sicherheit erfüllt werden müssen. Beispielsweise muss am Ende des Lebenszyklus ("End-of-Life") sichergestellt werden, dass kein Zugriff auf kryptographische Schlüssel im Bewegungssensor mehr möglich ist. Kryptographische Schlüssel werden beispielsweise während der Lebensdauer des Bewegungssensors dafür verwendet, um an andere Einheiten im Tachografensystem übermittelte Bewegungsinformationen zu verschlüsseln. 2. Die "Common Criteria Protection Profiles" für Bewegungssensoren sind beispielsweise in der folgenden Veröffentlichung beschrieben: "Common Criteria Protection Profile Digital Tachograph - Motion Sensor (MS PP)", 19. Mai 2017, XP055633529, gefunden im Internet:URL:https://www.bsi.bund.de/ SharedDocs/Downloads/DE/BSI/Zertifizierung/Reporte/ReportePP/ pp0093b_pdf.pdf;jsessionid=DA19428A38815FAE19F9ED9402936930.2_cid341? __blob=publicationFile&v=3.

Aufgabe der Erfindung ist es, einen Bewegungssensor und ein Verfahren zum Betreiben eines Bewegungssensors bereitzustellen, welche diese Vorgaben erfüllen und am Ende des Lebenszyklus keinen Zugriff auf kryptographische Schlüssel im Bewegungssensor erlauben.

Diese Aufgabe wird durch einen Bewegungssensor gemäß Anspruch 1 und ein Verfahren gemäß Anspruch 4 gelöst. Ausgestaltungen und Weiterbildungen des Erfindungsgedankens sind Gegenstand von abhängigen Ansprüchen.

Es wird ein Bewegungssensor beschrieben mit den Merkmalen des Anspruchs 1.

Dadurch ist es möglich, mit dem Erreichen des Lebensendes des Bewegungssensors die weitere Nutzung der kryptographischen Schlüssel bzw. der durch den kryptographischen Schlüssel verschlüsselten Daten zu verhindern.

Die Information kann zu dem Zeitpunkt in dem Bewegungssensor gespeichert werden, wenn das Lebensende des Bewegungssensors erreicht wurde.

Hierfür ist der Bewegungssensor dazu ausgebildet, mit einem Steuergerät verbunden zu werden. Der Bewegungssensor kann weiterhin dazu ausgebildet sein, die Information zu speichern, wenn ein entsprechender Software-Befehl von dem Steuergerät empfangen wurde.

Das Ausgeben eines entsprechenden Software-Befehls durch das Steuergerät kann beispielsweise manuell ausgelöst werden. Wenn das Lebensende des Bewegungssensors erreicht ist, kann beispielsweise ein Nutzer den entsprechenden Software-Befehl auslösen.

Die Information kann beispielsweise wenigstens eines aufweisen von: einen Nachweis über das Erreichen des Lebensendes des Bewegungssensors, das zum Zeitpunkt des Speicherns aktuelle Datum, die zum Zeitpunkt des Speicherns aktuelle Uhrzeit, den zum Zeitpunkt des Speicherns aktuellen Standort, eine Identifikationsnummer des Steuergerätes, von welchem der Software-Befehl empfangen wurde, und/oder die Identität einer Werkstatt oder eines Nutzers, von welchem das Speichern initiiert wurde. Dadurch ist zu jedem späteren Zeitpunkt nachvollziehbar, dass das Lebensende des Bewegungssensors erreicht wurde, und dass die kryptographischen Schlüssel nicht mehr zugänglich sind. Zudem ist genau nachvollziehbar, wann das Lebensende erreicht wurde bzw. wann, wo und von wem die entsprechenden Informationen in dem Bewegungssensor gespeichert wurden.

Der Bewegungssensor kann weiterhin dazu ausgebildet sein, den kryptographischen Schlüssel nach dem Speichern der Informationen zu löschen.

Auf diese Weise kann nicht nur der Zugriff auf den kryptographischen Schlüssel verhindert werden. Es kann vielmehr sichergestellt werden, dass tatsächlich keine Möglichkeit mehr besteht, die entsprechende Sperre zu umgehen.

Der Bewegungssensor kann weiterhin dazu ausgebildet sein, mit dem Steuergerät eines Fahrzeuges verbunden zu werden und die Information zu speichern, wenn der Bewegungssensor von dem Steuergerät des Fahrzeuges getrennt wird.

Die Information kann dabei einen Hinweis darauf enthalten, dass der Bewegungssensor bereits zuvor mit einem anderen Steuergerät eines Fahrzeuges verbunden war.

Einem Bewegungssensor kann es beispielsweise nur möglich sein, über seine gesamte Lebensdauer mit einem einzigen Steuergerät verbunden zu werden. Das Verbinden mit weiteren Steuergeräten kann untersagt sein. So kann verhindert werden, dass ausgetauschte Bewegungssensoren mit anderen Steuergeräten wiederverwendet werden, wodurch Manipulationen möglich gemacht werden könnten. Durch das Ablegen entsprechender Informationen in dem Bewegungssensor ist bei jedem Versuch, den Bewegungssensor mit weiteren Steuergeräten zu verbinden, eindeutig nachvollziehbar, dass der Bewegungssensor bereits mit einem anderen Steuergerät verbunden war.

Die Information kann durch eine externe Diagnoseeinheit auslesbar sein. Somit kann bei behördlichen Überprüfungen zu jedem Zeitpunkt nachvollzogen werden, ob das Lebensende des Bewegungssensors bereits erreicht wurde oder nicht.

Es wird weiterhin ein Verfahren zum Betreiben eines Bewegungssensors mit den Merkmalen des Anspruchs 4 beschrieben.

Die Erfindung wird nachfolgend anhand der Figuren der Zeichnung näher erläutert, wobei gleiche oder ähnliche Elemente mit denselben Bezugszeichen versehen sind. Es zeigt:
- Figur 1: in einer skizzenhaften Darstellung ein System mit einem Bewegungssensor,
- Figur 2: in einer skizzenhaften Darstellung ein Beispiel eines Bewegungssensors,
- Figur 3: in einer skizzenhaften Darstellung verschiedene Anschlüsse des Bewegungssensors aus Figur 2,
- Figur 4: in einem Blockdiagram ein Beispiel eines Bewegungssensors und
- Figur 5: in einem Ablaufdiagramm ein Verfahren zum Betreiben eines Bewegungssensors gemäß einer Ausführungsform der Erfindung.

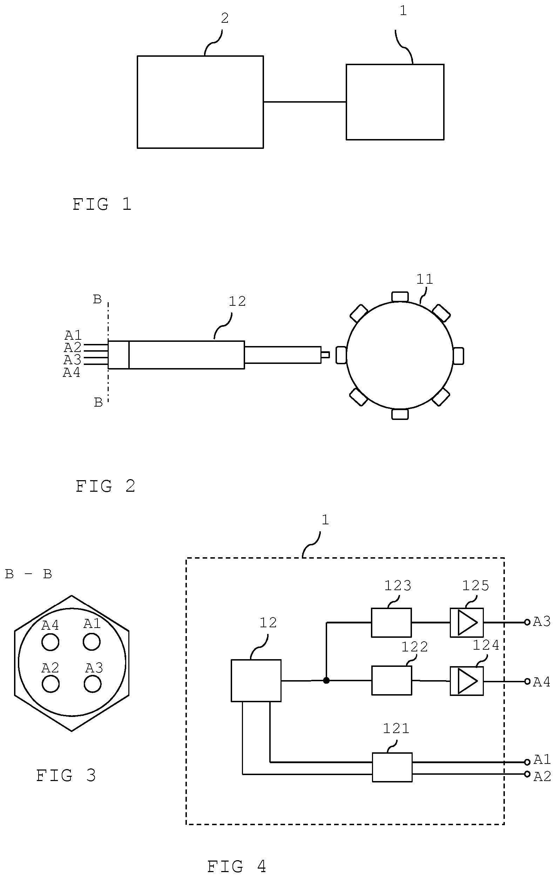

Figur 1 zeigt beispielhaft in einem Blockdiagramm eine schematische Darstellung eines Bewegungssensors 1. Der Bewegungssensor 1 ist mit einem Steuergerät 2 verbunden. Das Steuergerät 2 ist das Steuergerät eines Fahrzeugs. Das Steuergerät 2 kann Teil einer Tachografenanordnung sein oder kann mit einer Tachografenanordnung verbunden sein. Eine Tachografenordnung ist in Figur 1 nicht explizit dargestellt.

Der Bewegungssensor 1 ist dazu ausgebildet, Bewegungsdaten zu erfassen. Dies können beispielsweise Bewegungsdaten eines Fahrzeugs sein. Beispielsweise kann der Bewegungssensor 1 eine Geschwindigkeit des Fahrzeugs erfassen oder eine von dem Fahrzeug zurückgelegte Strecke. Entsprechende Bewegungsdaten kann der Bewegungssensor 1 dann beispielsweise an das Steuergerät 2 übertragen. Das Steuergerät 2 oder andere Elemente einer Tachografeneinheit können diese Bewegungsdaten dann weiter verarbeiten oder zur weiteren Verarbeitung abspeichern.

Figur 2 zeigt in schematischer Darstellung ein Beispiel eines Bewegungssensors 1. Der Bewegungssensor 1 kann beispielsweise eine Sensoreinheit 12 aufweisen. Ein solcher Bewegungssensor 1 kann beispielsweise in das Getriebe eines Fahrzeugs eingebaut werden. Ein Impulsrad 11 des Getriebes dreht sich dabei beispielsweise in Abhängigkeit von der Drehung der Fahrzeugräder. Das Impulsrad 11 weist dabei eine Vielzahl von Zähnen und Lücken auf. Die Sensoreinheit 12 ist in unmittelbarer Nähe zu dem Impulsrad 11 angeordnet, ist von diesem jedoch durch einen Luftspalt getrennt. In Abhängigkeit davon, ob sich die Sensoreinheit 12 gegenüber einem der Zähne oder einer Lücke befindet, ist dieser Luftspalt entweder geringer oder größer. Die Sensoreinheit 12 weist in der Regel einen Magnetkern und eine Spule oder einen Hall-Sensor auf (nicht dargestellt) . Ein durch die Sensoreinheit 12 erzeugtes Magnetfeld erstreckt sich dabei bis in das Impulsrad 11 hinein. Der magnetische Fluss durch die Spule hängt davon ab, ob dem Sensor eine Lücke oder ein Zahn des Impulsrades 11 gegenüber steht. Das Funktionsprinzip derartiger Bewegungssensoren ist bekannt und wird daher nicht in weiterem Detail erläutert.

Die Sensoreinheit 12 kann weiterhin Anschlüsse A1, A2, A3, A4 aufweisen. Über diese Anschlüsse A1, A2, A3, A4 können beispielsweise Bewegungsdaten an eine Steuereinheit (in Figur 2 nicht dargestellt) übertragen werden. Eine schematische Darstellung der Anschlüsse A1, A2, A3, A4 in der Schnittebene B-B ist in Figur 3 dargestellt. Die Anschlüsse A1, A2, A3, A4 können beispielsweise an einem Ende der Sensoreinheit 12 herausgeführt werden.

Der oben anhand der Figuren 2 und 3 beschriebene Bewegungssensor 1 ist jedoch lediglich ein Beispiel. Grundsätzlich kann jegliche Art von Bewegungssensor dazu verwendet werden, Bewegungsdaten eines Fahrzeugs zu bestimmen.

Bezugnehmend auf Figur 4 wird der grundsätzliche Aufbau eines Bewegungssensors beispielhaft anhand eines Blockdiagramms beschrieben. Neben der Sensoreinheit 12, welche die Bewegungsdaten bestimmt, kann der Bewegungssensor 1 noch weitere Elemente aufweisen. Beispielsweise kann der Bewegungssensor 1 eine Versorgungseinheit 121 aufweisen. Die Versorgungseinheit 121 kann mit einem ersten und einem zweiten Anschluss A1, A2 verbunden sein. Über den ersten und zweiten Anschluss A1, A2 kann dem Bewegungssensor 1 eine Versorgungsspannung bereitgestellt werden. Beispielsweise kann an dem ersten Anschluss A1 ein erstes Versorgungspotential bereitgestellt werden (z.B. ein positives Versorgungspotential +V_{b}) und an dem zweiten Anschluss A2 ein zweites Versorgungspotential (z.B. Masse, GND). Dadurch können die Elemente des Bewegungssensors 1 mit Energie versorgt werden.

Über eine Verschlüsselungseinheit 122 kann die Sensoreinheit 12 mit dem vierten Anschluss A4 verbunden sein. Die Verschlüsselungseinheit 122 ist dazu ausgebildet, von der Sensoreinheit 12 erfasste Bewegungsdaten zu verschlüsseln und an eine externe Einheit (z.B. Steuergerät 2) zu übertragen. Der Verschlüsselungseinheit 122 kann eine (optionale) erste Verstärkereinheit 124 nachgeschaltet sein. Um die Bewegungsdaten verschlüsselt übertragen zu können, kann die Verschlüsselungseinheit 122 einen geheimen kryptographischen Schlüssel aufweisen.

Die Bewegungssignale können beispielsweise mit dem standardisierten AES-Verschlüsselungsverfahren (Advanced Encryption Standard) verschlüsselt werden. Andere Verschlüsselungsverfahren sind jedoch ebenfalls möglich. Durch die Verschlüsselung wird sichergestellt, dass kein Zugriff auf die verschlüsselten Daten möglich ist und Unberechtigte somit nicht Kenntnis von diesen erlangen können.

Über eine Echtzeit-Signalverarbeitungseinheit 123 kann die Sensoreinheit 12 mit dem dritten Anschluss A3 verbunden sein. Die Echtzeit-Signalverarbeitungseinheit 123 kann die Bewegungsdaten beispielsweise unverschlüsselt an eine externe Einheit in Echtzeit übertragen. Der Echtzeit-Signalverarbeitungseinheit 123 kann eine (optionale) zweite Verstärkereinheit 125 nachgeschaltet sein.

In einem externen Gerät können die verschlüsselt übertragenen Daten entschlüsselt und mit den unverschlüsselt übertragenen Daten verglichen werden. So können die Daten auf ihre Echtheit hin überprüft werden.

Derartige Systeme müssen meist sehr hohen Sicherheitsanforderungen genügen. Beispielsweise muss gewährleistet sein, dass nach dem Lebensende eines Bewegungssensors 1 kein Zugriff auf die darin gespeicherten kryptographischen Schlüssel sowie die mit dem kryptographischen Schlüssel verschlüsselten Daten mehr möglich ist. Im einfachsten Fall wird der Bewegungssensor 1 an seinem Lebensende verschrottet und dabei insbesondere die gesamte Elektronik zerstört, um einen Zugriff auf die darin gespeicherten kryptographischen Schlüssel unmöglich zu machen. Dabei ist es jedoch nicht sichergestellt, dass bei der Verschrottung ein Bewegungssensor und insbesondere die darin gespeicherten kryptographischen Schlüssel und die mit dem kryptographischen Schlüssel verschlüsselten Daten an dessen Lebensende tatsächlich funktional zerstört werden.

Daher ist gemäß der vorliegenden Erfindung der Bewegungssensor 1 dazu ausgebildet, Informationen abzuspeichern. Nach dem Abspeichern dieser Informationen ist ein Zugriff auf in dem Bewegungssensor 1 gespeicherte kryptographische Schlüssel und/oder die mit dem kryptographischen Schlüssel verschlüsselten Daten nicht mehr möglich. Die Informationen können beispielsweise in einem internen Speicher des Bewegungssensors 1 gespeichert werden. Beispielsweise kann der interne Speicher ein Speicher der Verschlüsselungseinheit 122 sein, in welchem auch die kryptographischen Schlüssel selbst gespeichert sind.

Gemäß der vorliegenden Erfindung werden die Informationen in dem Bewegungssensor 1 gespeichert, wenn das Lebensende des Bewegungssensors 1 erreicht wurde. Das Speichern der Informationen kann beispielsweise über ein Steuergerät 2 initiiert werden, welches mit dem Bewegungssensor 1 verbunden sein kann (vgl. Figur 1). Das Steuergerät 2 kann beispielsweise einen entsprechenden Software-Befehl an den Bewegungssensor 1 ausgeben, welcher das Speichern der Informationen initiiert. Beispielsweise kann ein Nutzer das Steuergerät 2 dazu veranlassen, den Software-Befehl an den Bewegungssensor 1 auszugeben. Die gespeicherten Informationen können dabei beispielsweise einen Nachweis über das Erreichen des Lebensendes des Bewegungssensors 1, das zum Zeitpunkt des Speicherns aktuelle Datum, die zum Zeitpunkt des Speicherns aktuelle Uhrzeit, den zum Zeitpunkt des Speicherns aktuellen Standort, eine Identifikationsnummer des Steuergerätes 2, von welchem der Software-Befehl empfangen wurde, und/oder die Identität einer Werkstatt oder eines Nutzers, von welchem das Speichern initiiert wurde, enthalten.

Durch das Ablegen der Informationen im Bewegungssensor 1 werden die im Bewegungssensor 1 gespeicherten kryptographischen Schlüssel und die mit dem kryptographischen Schlüssel verschlüsselten Daten eindeutig als ungültig gekennzeichnet. Die Informationen können beispielsweise durch externe Geräte ausgelesen werden. So kann zu jedem späteren Zeitpunkt überprüft werden, ob das Lebensende des Bewegungssensors 1 erreicht wurde (Informationen abgelegt) oder nicht (keine Informationen abgelegt) . Es ist dabei beispielsweise auch möglich, dass mit dem entsprechenden Software-Befehl die sicherheitsrelevanten Daten, wie die kryptographischen Schlüssel und die mit dem kryptographischen Schlüssel verschlüsselten Daten, aus dem Bewegungssensor 1 gelöscht werden. Dadurch ist es dann in keinem Fall mehr möglich, auf die Schlüssel und die mit dem kryptographischen Schlüssel verschlüsselten Daten zuzugreifen. Durch das Ablegen der entsprechenden Informationen kann zu einem späteren Zeitpunkt nachvollzogen werden, wann, wo und von wem die kryptographischen Schlüssel und die mit dem kryptographischen Schlüssel verschlüsselten Daten unwirksam gemacht bzw. gelöscht wurden.

Gemäß einem alternativen Beispiel kann ein Bewegungssensor 1 während seiner Lebensdauer nur mit einem einzigen Steuergerät 2 verbunden werden. Ein Steuergerät 2 ist in der Regel eindeutig einem Fahrzeug zugeordnet. Ein Bewegungssensor 1 kann daher beispielsweise lediglich in einem einzigen Fahrzeug Verwendung finden. Mit dem Lebensende des Fahrzeugs oder einer Tachografeneinheit des Fahrzeugs ist dann auch automatisch das Lebensende des Bewegungssensors erreicht. Wird der Bewegungssensor 1 von einem Steuergerät 2 getrennt, kann eine entsprechende Information darüber in dem Bewegungssensor 1 gespeichert werden. Ist diese Information in dem Bewegungssensor 1 gespeichert, ist kein Zugriff auf die kryptographischen Schlüssel und die mit dem kryptographischen Schlüssel verschlüsselten Daten des Bewegungssensors 1 mehr möglich. Bei dem Versuch, den Bewegungssensor 1 mit einem weiteren Steuergerät 2 zu verbinden, schlägt der Zugriff auf die kryptographischen Schlüssel und die mit dem kryptographischen Schlüssel verschlüsselten Daten somit fehl und Daten können nicht verschlüsselt übertragen werden. Es ist somit nicht möglich, den Bewegungssensor 1 mit mehr als einem Steuergerät 2 zu verbinden. Des Weiteren kann die Information darüber, dass der Bewegungssensor 1 bereits mit einem anderen Steuergerät 2 gepaart war, zu jedem späteren Zeitpunkt eindeutig ausgelesen werden. Die Informationen im Bewegungssensor 1 abzulegen, wenn dieser von dem Steuergerät 2 getrennt wird, ist dabei lediglich ein Beispiel. Grundsätzlich ist es ebenso möglich, aber nicht erfindungsgemäß, entsprechende Informationen in dem Bewegungssensor 1 zu speichern, wenn dieser zum ersten Mal mit einem Steuergerät 2 verbunden wird. Beispielsweise kann eine eindeutige Identifikation des Steuergerätes 2 in dem Bewegungssensor 1 gespeichert werden. Nach dem Trennen von dem Steuergerät 2 bleiben diese Informationen erhalten. Auch so kann zu einem späteren Zeitpunkt eindeutig erkannt werden, dass der Bewegungssensor 1 bereits mit einem Steuergerät 2 verbunden war.

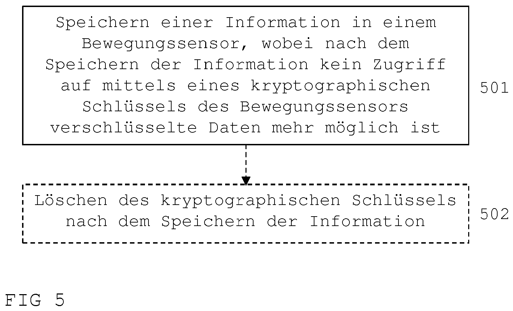

Bezugnehmend auf Figur 5 ist ein beispielhaftes Verfahren zum Betreiben eines Bewegungssensors 1 in einem Ablaufdiagramm schematisch dargestellt. Der Bewegungssensor 1 weist dabei eine Sensoreinheit 12, die dazu ausgebildet ist, Bewegungsdaten zu erfassen, und eine Verschlüsselungseinheit 122 auf, die dazu ausgebildet ist, Bewegungsdaten mittels eines in der Verschlüsselungseinheit 122 gespeicherten kryptographischen Schlüssels zu verschlüsseln. Das Verfahren weist das Speichern einer Information in dem Bewegungssensor 1 auf (Schritt 501), wobei nach dem Speichern der Information kein Zugriff auf die durch den kryptographischen Schlüssel verschlüsselten Daten mehr möglich ist.

Optional kann das Verfahren weiterhin das Löschen des kryptographischen Schlüssels nach dem Speichern der Information aufweisen (Schritt 502).

## Patentansprüche

1. Bewegungssensor (1) mit
einer Sensoreinheit (12), die dazu ausgebildet ist Bewegungsdaten zu erfassen, und
einer Verschlüsselungseinheit (122), die dazu ausgebildet ist, von der Sensoreinheit (12) erfasste Bewegungsdaten mittels eines in der Verschlüsselungseinheit (122) gespeicherten kryptographischen Schlüssels zu verschlüsseln, wobei der Bewegungssensor (1) dazu ausgebildet ist, mit einem Steuergerät (2) eines Fahrzeugs verbunden zu werden, **dadurch gekennzeichnet, dass**
der Bewegungssensor (1) dazu ausgebildet ist, wenn das Lebensende des Bewegungssensors (1) erreicht wurde eine Information zu speichern, wobei durch das Speichern der Information entweder die im Bewegungssensor (1) gespeicherten kryptographischen Schlüssel und die mit dem kryptographischen Schlüssel verschlüsselten Daten eindeutig als ungültig gekennzeichnet werden oder die im Bewegungssensor (1) gespeicherten kryptographischen Schlüssel und die mit dem kryptographischen Schlüssel verschlüsselten Daten aus dem Bewegungssensor (1) gelöscht werden, so dass nach dem Speichern der Information kein Zugriff auf die kryptographischen Schlüssel und die durch die kryptographischen Schlüssel verschlüsselten Daten mehr möglich ist, und dass
der Bewegungssensor (1) dazu ausgebildet ist, die Information zu speichern, entweder wenn ein entsprechender Software-Befehl von dem Steuergerät (2) empfangen wurde oder wenn der Bewegungssensor (1) von dem Steuergerät (2) getrennt wird.

2. Bewegungssensor (1) nach Anspruch 1, wobei die Information wenigstens eines aufweist von: einen Nachweis über das Erreichen des Lebensendes des Bewegungssensors (1), das zum Zeitpunkt des Speicherns aktuelle Datum, die zum Zeitpunkt des Speicherns aktuelle Uhrzeit, den zum Zeitpunkt des Speicherns aktuellen Standort, eine Identifikationsnummer des Steuergerätes (2), von welchem der Software-Befehl empfangen wurde, und/oder die Identität einer Werkstatt oder eines Nutzers, von welchem das Speichern initiiert wurde.

3. Bewegungssensor nach einem der Ansprüche 1 bis 2, wobei die Information durch eine externe Diagnoseeinheit auslesbar ist.

4. Verfahren zum Betreiben eines Bewegungssensors (1), wobei der Bewegungssensor (1) eine Sensoreinheit (12), die dazu ausgebildet ist, Bewegungsdaten zu erfassen, und eine Verschlüsselungseinheit (122) aufweist, die dazu ausgebildet ist, von der Sensoreinheit (12) erfasste Bewegungsdaten mittels eines in der Verschlüsselungseinheit (122) gespeicherten kryptographischen Schlüssels zu verschlüsseln, und wobei der Bewegungssensor (1) mit einem Steuergerät (2) eines Fahrzeugs verbunden ist, **gekennzeichnet durch**:
Speichern einer Information in dem Bewegungssensor (1), wobei durch das Speichern der Information entweder die im Bewegungssensor (1) gespeicherten kryptographischen Schlüssel und die mit dem kryptographischen Schlüssel verschlüsselten Daten eindeutig als ungültig gekennzeichnet werden oder die im Bewegungssensor (1) gespeicherten kryptographischen Schlüssel und die mit dem kryptographischen Schlüssel verschlüsselten Daten aus dem Bewegungssensor (1) gelöscht werden, so dass nach dem Speichern der Information kein Zugriff auf die kryptographischen Schlüssel und die durch die kryptographischen Schlüssel verschlüsselten Daten mehr möglich ist und wobei die Information in dem Bewegungssensor (1) gespeichert wird, wenn das Lebensende des Bewegungssensors (1) erreicht wurde,
wobei die Information gespeichert wird, wenn ein entsprechender Software-Befehl von dem Steuergerät (2) empfangen wurde oder wenn der Bewegungssensor (1) von dem Steuergerät getrennt wird.

## Claims

1. Motion sensor (1) having
a sensor unit (12), which is designed to acquire motion data, and
an encryption unit (122), which is designed to encrypt motion data acquired by the sensor unit (12) by means of a cryptographic key stored in the encryption unit (122), the motion sensor (1) being designed to be connected to a control unit (2) of a vehicle, **characterized in that**
the motion sensor (1) is designed to store information when the end of life of the motion sensor (1) has been reached, wherein the storage of the information either clearly marks the cryptographic keys stored in the motion sensor (1) and the data encrypted with the cryptographic key as invalid or erases the cryptographic keys stored in the motion sensor (1) and the data encrypted with the cryptographic key from the motion sensor (1), with the result that, after the information has been stored, it is no longer possible to access the cryptographic keys and the data encrypted by the cryptographic keys, and **in that**
the motion sensor (1) is designed to store the information either when a corresponding software command has been received from the control unit (2) or when the motion sensor (1) is disconnected from the control unit (2).

2. Motion sensor (1) according to Claim 1, wherein the information comprises at least one from: evidence of the end of life of the motion sensor (1) having been reached, the current date at the time of storage, the current time at the time of storage, the current location at the time of storage, an identification number of the control unit (2) from which the software command was received, and/or the identity of a workshop or user that/who initiated the storage.

3. Motion sensor according to either of Claims 1 to 2, wherein the information can be read by an external diagnostic unit.

4. Method for operating a motion sensor (1), the motion sensor (1) comprising a sensor unit (12), which is designed to acquire motion data, and an encryption unit (122), which is designed to encrypt motion data acquired by the sensor unit (12) by means of a cryptographic key stored in the encryption unit (122), and the motion sensor (1) being connected to a control unit (2) of a vehicle, **characterized by**:
storage of information in the motion sensor (1), wherein the storage of the information either clearly marks the cryptographic keys stored in the motion sensor (1) and the data encrypted with the cryptographic key as invalid or erases the cryptographic keys stored in the motion sensor (1) and the data encrypted with the cryptographic key from the motion sensor (1), with the result that, after the information has been stored, it is no longer possible to access the cryptographic keys and the data encrypted by the cryptographic keys, and wherein the information is stored in the motion sensor (1) when the end of life of the motion sensor (1) has been reached,
wherein the information is stored when a corresponding software command has been received from the control unit (2) or when the motion sensor (1) is disconnected from the control unit.

## Revendications

1. Détecteur de mouvement (1), comprenant
une unité de capteur (12) qui est réalisée pour détecter des données de mouvement, et
une unité de cryptage (122) qui est réalisée pour crypter des données de mouvement détectées par l'unité de capteur (12) au moyen d'une clé cryptographique stockée dans l'unité de cryptage (122), le détecteur de mouvement (1) étant réalisé pour être relié à un appareil de commande (2) d'un véhicule, **caractérisé en ce que**
le détecteur de mouvement (1) est réalisé pour stocker une information lorsque la fin de vie du détecteur de mouvement (1) a été atteinte, dans lequel le stockage de l'information permet soit de marquer comme non valables de manière univoque les clés cryptographiques stockées dans le détecteur de mouvement (1) et les données cryptées avec la clé cryptographique, soit de supprimer du détecteur de mouvement (1) les clés cryptographiques stockées dans le détecteur de mouvement (1) et les données cryptées avec la clé cryptographique, de sorte qu'après le stockage de l'information, plus aucun accès aux clés cryptographiques et aux données cryptées par les clés cryptographiques n'est possible, et **en ce que**
le détecteur de mouvement (1) est réalisé pour stocker l'information soit si une instruction logicielle correspondante a été reçue de l'appareil de commande (2), soit si le détecteur de mouvement (1) est séparé de l'appareil de commande (2).

2. Détecteur de mouvement (1) selon la revendication 1, dans lequel l'information présente au moins un élément parmi : une preuve que la fin de vie du détecteur de mouvement (1) est atteinte, la date actuelle au moment du stockage, l'heure actuelle au moment du stockage, le lieu actuel au moment du stockage, un numéro d'identification de l'appareil de commande (2) duquel l'instruction logicielle a été reçue, et/ou l'identité d'un atelier ou d'un utilisateur par qui le stockage a été initié.

3. Détecteur de mouvement selon l'une quelconque des revendications 1 à 2, dans lequel l'information peut être lue par une unité de diagnostic externe.

4. Procédé permettant de faire fonctionner un détecteur de mouvement (1), le détecteur de mouvement (1) présentant une unité de capteur (12) qui est réalisée pour détecter des données de mouvement, et une unité de cryptage (122) qui est réalisée pour crypter des données de mouvement détectées par l'unité de capteur (12) au moyen d'une clé cryptographique stockée dans l'unité de cryptage (122), et dans lequel le détecteur de mouvement (1) est relié à un appareil de commande (2) d'un véhicule, **caractérisé par** les étapes consistant à :
stocker une information dans le détecteur de mouvement (1), dans lequel le stockage de l'information permet soit de marquer comme non valables de manière univoque les clés cryptographiques stockées dans le détecteur de mouvement (1) et les données cryptées avec la clé cryptographique, soit de supprimer du détecteur de mouvement (1) les clés cryptographiques stockées dans le détecteur de mouvement (1) et les données cryptées avec la clé cryptographique, de sorte qu'après le stockage de l'information, plus aucun accès aux clés cryptographiques et aux données cryptées par les clés cryptographiques n'est possible, et dans lequel l'information est stockée dans le détecteur de mouvement (1) lorsque la fin de vie du détecteur de mouvement (1) a été atteinte,
dans lequel l'information est stockée si une instruction logicielle correspondante a été reçue de l'appareil de commande (2) ou si le détecteur de mouvement (1) est séparé de l'appareil de commande.
